# EUROPÄISCHE PATENTANMELDUNG

(11) **EP 1 666 390 A1**
(43) Veröffentlichungstag der Anmeldung: **07.06.2006**
(21) Anmeldenummer: 05025361.6
(22) Anmeldetag: 21.11.2005
(51) Int. Cl.: B65G 47/51, B65G 47/64

(54) **Zwischenspeicher**

(30) Priorität: 06.12.2004 DE 102004058734
(71) Anmelder: ALPMA Alpenland Maschinenbau GmbH, 83543 Rott am Inn (DE)
(72) Erfinder: Gäßler, Hans, 84544 Aschau/Inn (DE)
(74) Vertreter: Manitz, Finsterwald & Partner GbR

(57) **Zusammenfassung**

Die Erfindung betrifft eine Vorrichtung zum Zwischenspeichern von mittels einer Fördereinrichtung transportierbaren Produkten, insbesondere Lebensmittelprodukten, mit mehreren übereinander angeordneten Speicherbändern (11,13,15), die jeweils zum Transport der Produkte ausgelegt sind, wobei zum wahlweisen Be- und Entladen der einzelnen Speicherbänder (11,13,15) Einstellmittel (29,31,33,35) vorgesehen sind, durch die die Neigung der Speicherbänder gegenüber der Horizontalen (27) einstellbar ist.

## Beschreibung

Die Erfindung betrifft eine Vorrichtung zum Zwischenspeichern von mittels einer Fördereinrichtung transportierbaren Produkten, insbesondere Lebensmittelprodukten, mit mehreren übereinander angeordneten Speicherbändern, die jeweils zum Transport der Produkte ausgelegt sind.

Derartige Zwischenspeicher sind grundsätzlich bekannt. Diese bekannten Zwischenspeicher werden in der Regel zwischen einer vorgeschalteten und einer nachgeschalteten Verarbeitungseinrichtung angeordnet, wobei im Betrieb die Produkte mittels der Fördereinrichtung, beispielsweise eines Förderbands, von der vorgeschalteten Verarbeitungseinrichtung über den Zwischenspeicher, dessen Speicherbänder ebenfalls jeweils als Fördereinrichtung zum Transport der Produkte ausgelegt sind, zu der nachgeschalteten Verarbeitungseinrichtung transportiert werden.

Der Zwischenspeicher wird dazu verwendet, die von der vorgeschalteten Verarbeitungseinrichtung mit einer bestimmten Zufuhrrate angelieferten Produkte zwischenzuspeichern bzw. zu puffern, falls die nachgeschaltete Verarbeitungseinrichtung die angelieferten Produkte vorübergehend lediglich mit einer geringeren Rate als der Zufuhrrate verarbeiten kann. Der Zwischenspeicher nimmt in diesem Betriebsmodus mehr Produkte auf, als er an die nachgeschaltete Verarbeitungseinrichtung abgibt, so dass mehrere Speicherbänder mit Produkten beladen werden.

Wenn andererseits die Anforderung besteht, dass die nachgeschaltete Verarbeitungseinrichtung die Produkte mit einer höheren Rate als der momentan vorliegenden - eventuell beeinträchtigten - Zufuhrrate verarbeiten kann, gibt der über einen gewissen Vorrat an Produkten verfügende Zwischenspeicher mehr Produkte an die nachgeschaltete Verarbeitungseinrichtung ab, als er von der vorgeschalteten Verarbeitungseinrichtung aufnimmt, so dass die nachgeschaltete Verarbeitungseinrichtung konstant mit Produkten versorgt werden kann, wobei die Speicherbänder des Zwischenspeichers sukzessive entladen werden.

Beispielsweise kann es sich bei der vorgeschalteten Verarbeitungseinrichtung um eine Portioniereinrichtung für Lebensmittelprodukte und bei der nachgeschalteten Verarbeitungseinrichtung um eine Einrichtung zum Verpacken der Portionen der Lebensmittelprodukte handeln.

Da mehrere Speicherbänder übereinander angeordnet sind, sind üblicherweise ein Einlaufband und ein Auslaufband vorgesehen, die jeweils als Förderband ausgebildet sein können. Das Einlaufband und das Auslaufband sind zwischen einem an die Speicherbänder einlaufseitig anschließenden Förderband und dem Zwischenspeicher bzw. zwischen dem Zwischenspeicher und einem an die Speicherbänder auslaufseitig anschließenden Förderband angeordnet und jeweils in ihrer Neigung gegenüber der Horizontalen verstellbar. Das Einlaufband und das Auslaufband können aufgrund ihrer Verstellbarkeit somit gewissermaßen als wahlweise für verschiedene Speicherbänder einsetzbare Rampen wirken, um bei Bedarf das Be- bzw. Entladen auch derjenigen Speicherbänder zu ermöglichen, die sich nicht auf Höhe der an die Speicherbänder anschließenden Förderbänder befinden.

Bei einem Zwischenspeicher der genannten Art ist jedoch von Nachteil, dass in gegenüber der Horizontalen geneigten Stellungen das Einlaufband und das Auslaufband zumeist relativ steile Rampen für die Produkte ausbilden, so dass die Übergabe der Produkte von dem Förderband an die jeweilige Rampe und umgekehrt sowie von der jeweiligen Rampe an die Speicherbänder und umgekehrt nur unter Inkaufnahme eines sehr plötzlichen Richtungswechsels vonstatten gehen kann.

Hierbei kann es beispielsweise passieren, dass die transportierten Produkte insbesondere stochastisch seitlich versetzt und/oder verdreht werden, und somit eine Position und/oder Orientierung einnehmen, auf die die nachgeschaltete Bearbeitungseinrichtung nicht eingestellt ist, so dass die Produkte von dieser nicht mehr verarbeitet werden können. Handelt es sich bei den Produkten z.B. um Stapel von übereinander angeordneten und miteinander ausgerichteten Käsescheiben, so kann der genannte Effekt dazu führen, dass der jeweilige Stapel an einer der Übergabepositionen derart verrutscht, dass die einzelnen Käsescheiben in Schuppenformation übereinander zu liegen kommen, so dass sie von der nachgeschalteten Verarbeitungseinrichtung, die lediglich zur Verarbeitung von in Stapelform angeordneten Käsescheiben ausgelegt ist, nicht mehr verarbeitet werden können.

Der Erfindung liegt die Aufgabe zugrunde, eine Vorrichtung der eingangs genannten Art zu schaffen, die einen reibungslosen Transport der Produkte gewährleistet, insbesondere bei deren Übergabe an ein Einlaufband und/oder an die Vorrichtung und/oder von der Vorrichtung an ein Auslaufband und/oder an ein Förderband.

Die Lösung dieser Aufgabe erfolgt durch die Merkmale des Anspruchs 1 und insbesondere dadurch, dass zum wahlweisen Be- und Entladen der einzelnen Speicherbänder Einstellmittel vorgesehen sind, durch die die Neigung der Speicherbänder gegenüber der Horizontalen einstellbar ist.

Die erfindungsgemäße Vorrichtung zeichnet sich also dadurch aus, dass die Neigung der übereinander angeordneten Speicherbänder gegenüber der Horizontalen veränderbar ist. Hierdurch kann erreicht werden, dass ein Ende eines höher gelegenen Speicherbands und/oder ein insbesondere gegenüberliegendes Ende eines tiefer gelegenen Speicherbands auf das Höhenniveau eines an die Speicherbänder anschließenden Förderbands, Einlauf- oder Auslaufbands absenkbar bzw. anhebbar ist. Insbesondere ist die Neigung der Speicherbänder derart einstellbar, dass alle Speicherbänder jeweils einlauf- und auslaufseitig auf das Höhenniveau eines an die Speicherbänder anschließenden Förderbands, Einlauf- oder Auslaufbands absenkbar bzw. anhebbar sind.

Da die Höhendifferenz zwischen einem Förderband, Einlauf- oder Auslaufband und höher oder tiefer gelegenen Speicherbändern durch Neigen der Speicherbänder gegenüber der Horizontalen kompensierbar ist, kann auf Einlauf- und Auslaufbänder, die jeweils in ihrer Neigung gegenüber der Horizontalen verstellbar sind, prinzipiell verzichtet werden. Darüber hinaus besitzen die Speicherbänder in Förderrichtung üblicherweise eine Länge, die deutlich größer ist als die der Einlauf- oder Auslaufbänder, so dass die gegenüber der Horizontalen geneigten Speicherbänder Rampen ausbilden, die weitaus flacher verlaufen, als dies bei den aus dem Stand der Technik bekannten, durch die kürzeren Einlauf- und Auslaufbänder gebildeten Rampen der Fall ist. Somit können durch die Fördereinrichtung oder ein Einlaufband transportierte Produkte ohne unerwünschte Positionsänderungen reibungslos an die ggf. nur eine geringe Neigung aufweisenden Speicherbänder oder von diesen Speicherbändern an ein Auslaufband oder Förderband übergeben werden.

Vorteilhafte Ausführungsformen der Erfindung sind in den Unteransprüchen, der Beschreibung und der Zeichnung angegeben.

Nach einer bevorzugten Ausführungsform der Erfindung sind die Speicherbänder parallel zueinander orientiert und/oder gemeinsam in ihrer Neigung verstellbar. Insbesondere können die Speicherbänder bei allen einstellbaren Neigungen parallel zueinander verlaufen. Bei gemeinsam verstellbaren Speicherbändern kann der konstruktive Aufwand und somit der Kostenaufwand für die Einstellmittel, die die Neigung der Speicherbänder gegenüber der Horizontalen ermöglichen, minimiert werden.

Besonders vorteilhaft ist es, wenn die Einstellmittel Führungsmittel umfassen, in denen die Speicherbänder höhenverstellbar gelagert sind. Die Führungsmittel können dabei derart orientiert sein, dass eine Verstellbewegung der Speicherbänder bzw. der Führungsmittel neben einer vertikalen Komponente auch eine horizontale Komponente aufweist.

Vorzugsweise ist die höhenverstellbare Lagerung einlaufseitig und/oder auslaufseitig der Speicherbänder ausgebildet. Die Führungsmittel sind hierbei derart ausgelegt, dass die Speicherbänder an ihren beiden Enden jeweils höhenverstellbar gelagert sind. Hierdurch kann die Neigung der Speicherbänder gegenüber der Horizontalen auf besonders einfache Weise eingestellt werden. Die beiden Enden der Speicherbänder sind bevorzugt unabhängig voneinander in ihrer Höhe verstellbar.

Des Weiteren wird erfindungsgemäß vorgeschlagen, dass zum Ausgleichen einer veränderten Neigung der Speicherbänder die Führungsmittel um eine Schwenkachse schwenkbar sind. Dies ist insbesondere dann von Vorteil, wenn durch die Führungsmittel eine lineare Zwangsführung für die Höhenverstellung der Speicherbänder vorgegeben ist. Durch die Drehbewegbarkeit der Führungsmittel kann in diesem Fall auf einfache Weise gewährleistet werden, dass die Neigung der Speicherbänder gegenüber der Horizontalen einstellbar wird, ohne dass eine Dehnung oder Stauchung der Speicherbänder erforderlich wäre.

Es ist weiterhin bevorzugt, dass die Speicherbänder unabhängig voneinander antreibbar sind. Dies ermöglicht, dass immer nur diejenigen Speicherbänder angetrieben werden müssen, die gerade zum Zwischenspeichern, Be- oder Entladen benötigt werden. Insbesondere können die Speicherbänder mit verschiedenen Geschwindigkeiten betrieben werden, so dass unterschiedliche Verarbeitungsraten der vorgeschalteten und der nachgeschalteten Verarbeitungseinrichtung ausgleichbar sind.

Nach einer besonders bevorzugten Ausführungsform der Erfindung ist ein Einlaufband oder eine Einlaufeinrichtung und/oder ein Auslaufband oder eine Auslaufeinrichtung vorgesehen, das oder die sich einlaufseitig und/oder auslaufseitig an die Speicherbänder anschließt und dessen oder deren Neigung entweder unveränderlich oder gegenüber der Horizontalen einstellbar ist. Ist die Neigung einstellbar, weist das Einlaufband oder die Einlaufeinrichtung und/oder Auslaufband oder die Auslaufeinrichtung bevorzugt eine Neigung auf, die zwischen der Neigung eines einlaufseitig an das Einlaufband oder die Einlaufeinrichtung und/oder auslaufseitig an das Auslaufband oder die Auslaufeinrichtung anschließenden Förderbands gegenüber der Horizontalen und der Neigung der Speicherbänder gegenüber der Horizontalen liegt. Hierdurch wird erreicht, dass die Neigung der Speicherbänder gegenüber dem Einlaufband und/oder Auslaufband sowie die Neigung des Einlaufbands und/oder des Auslaufbands gegenüber dem an das Einlaufband und/oder Auslaufband anschließenden Förderband jeweils kleiner ist als die Neigung der Speicherbänder gegenüber der Horizontalen, so dass insgesamt eine einmalige Änderung der Förderrichtung gewissermaßen durch zwei hintereinander geschaltete jeweils kleinere Änderungen der Förderrichtung ersetzt wird. Die Produkte können somit besonders reibungslos transportiert werden.

Die Erfindung wird nachfolgend beispielhaft unter Bezugnahme auf die Zeichnung erläutert. Es zeigen:
- Fig. 1: einen aus dem Stand der Technik bekannten Zwischenspeicher,
- Fig. 2: einen erfindungsgemäßen Zwischenspeicher gemäß einer ersten Ausführungsform der Erfindung, und
- Fig. 3: einen erfindungsgemäßen Zwischenspeicher gemäß einer zweiten Ausführungsform der Erfindung.

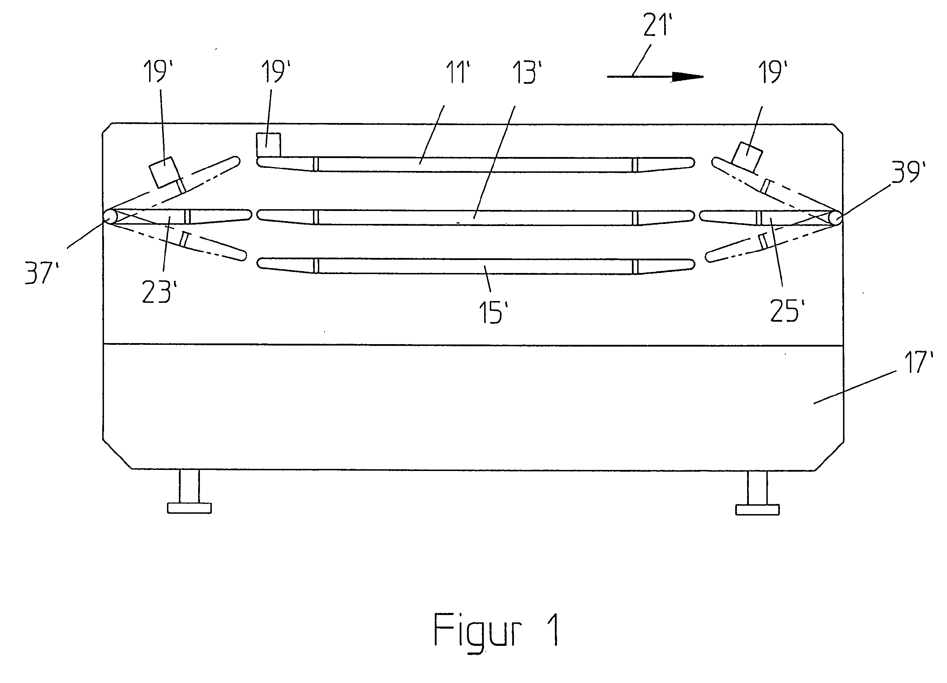

Fig. 1 zeigt einen aus dem Stand der Technik bekannten Zwischenspeicher mit drei übereinander angeordneten, jeweils horizontal orientierten Speicherbändern 11', 13', 15', die an einem Gehäuse 17' des Zwischenspeichers angebracht und jeweils zum Transport von Produkten 19' entlang einer Förderrichtung 21' ausgelegt sind. Der bekannte Zwischenspeicher weist weiterhin ein einlaufseitig an die Förderbänder 11', 13', 15' anschließendes Einlaufband 23' und ein auslaufseitig an die Förderbänder 11', 13', 15' anschließendes Auslaufband 25' auf.

Das Einlaufband 23 und das Auslaufband 25 sind jeweils um eine Schwenkachse 37', 39' schwenkbar, wobei die beiden Schwenkachsen 37', 39' auf Höhe des mittleren Speicherbands 13' angeordnet sind. Das Einlaufband 23' und das Auslaufband 25' können, wie in Fig. 1 dargestellt, mit ihren den Schwenkachsten 37' bzw. 39' gegenüberliegenden freien Enden jeweils sowohl nach oben als auch nach unten derart geschwenkt werden, dass die Produkte 19' wahlweise dem oberen, dem mittleren und dem unteren Speicherband 11', 13', 15' zugeführt bzw. von diesen abgegeben werden können. Bei dem in Fig. 1 gezeigten bekannten Zwischenspeicher treten bei einer Übergabe an die oberen und unteren Speicherbänder 11' und 15' bzw. einer Übergabe von den oberen und unteren Speicherbändern 11' und 15' die vorstehend im Zusammenhang mit dem Stand der Technik erläuterten Probleme auf.

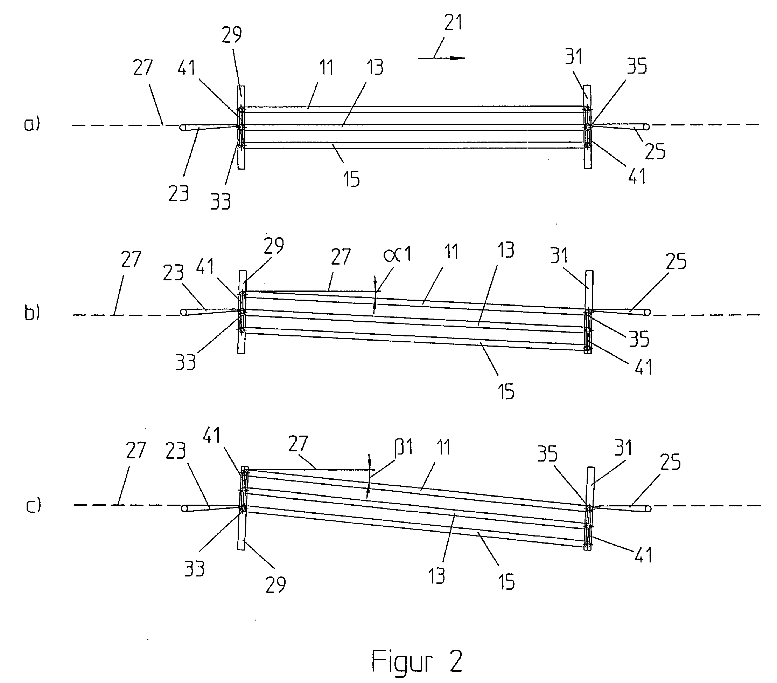

Fig. 2 zeigt eine erste Ausführungsform der erfindungsgemäßen Vorrichtung zum Zwischenspeichern von mittels einer Fördereinrichtung transportierbaren Produkten, insbesondere Lebensmittelprodukten, die ebenfalls drei übereinander angeordnete Speicherbänder 11, 13, 15 aufweist, welche jeweils zum Transport der Produkte entlang einer Förderrichtung 21 ausgelegt und unabhängig voneinander antreibbar sind. Zusätzlich sind ein Einlaufband 23 und ein Auslaufband 25 vorgesehen, die sich einlaufseitig bzw. auslaufseitig an die Speicherbänder 11, 13, 15 anschließen, jeweils horizontal orientiert und in ihrer Neigung gegenüber der Horizontalen 27 unveränderlich sind. Der erfindungsgemäße Zwischenspeicher ist als Horizontalspeicher ausgebildet.

Die Speicherbänder 11, 13, 15 sind gemeinsam in ihrer Neigung gegenüber der Horizontalen 27 einstellbar, wie aus den verschiedenen Stellungen der Speicherbänder 11, 13, 15 in den Fig. 2a bis 2c, in denen die Speicherbänder 11, 13, 15 jeweils parallel zueinander orientiert sind, deutlich wird.

Hierfür ist jedes der Speicherbänder 11, 13, 15 mit seinem einen Ende in einem einlaufseitig ausgebildeten Führungselement 29 und mit seinem anderen Ende in einem auslaufseitig ausgebildeten Führungselement 31 höhenverstellbar gelagert, wobei die Führungselemente 29, 31, beispielsweise in Form von Führungsschienen, als Zwangsführung für die Enden der Speicherbänder 11, 13, 15 ausgebildet sind. Die höhenverstellbare Lagerung in den beiden Führungselementen 29, 31 ist dabei derart ausgelegt, dass die beiden Enden der Speicherbänder 11, 13, 15 unabhängig voneinander in ihrer Höhe verstellbar sind, wobei die einlaufseitigen Enden und die auslaufseitigen Enden der Speicherbänder 11, 13, 15 jeweils gemeinsam höhenverstellbar sind. Hierfür sind die einlaufseitigen und auslaufseitigen Enden der Speicherbänder 11, 13, 15 jeweils über ein Verbindungselement 41 drehgelagert miteinander verbunden.

Um beim Verschieben lediglich eines Endes der Speicherbänder 11, 13, 15 oder beim Verschieben der beiden Enden der Speicherbänder 11, 13, 15 in verschiedene Richtungen die veränderte Neigung der Speicherbänder 11, 13, 15 auszugleichen, sind die beiden Führungselemente 29, 31 jeweils um eine Schwenkachse 33, 35 zumindest geringfügig schwenkbar, wobei die Schwenkachsen 33, 35 mittig der Längserstreckung der Führungsschienen 29, 31 ausgebildet sind. Bei der Ausführungsform gemäß Fig. 2 fallen die Schwenkachsen 33, 35 in den verschiedenen Stellungen der Speicherbänder 11, 13, 15 jeweils mit einem Ende eines Speicherbands 11, 13, 15 zusammen. Eine Verstellbewegung der Enden der Speicherbänder 11, 13, 15 in den Führungselementen 29, 31 besitzt neben einer vertikalen Komponente somit in der Regel auch eine horizontale Komponente. Die beiden Führungselemente 29, 31 und die beiden Schwenkachsen 33, 35 der Führungselemente 29, 31 bilden somit Einstellmittel zur Einstellung der Neigung der Speicherbänder 11, 13, 15.

Nachfolgend wird das wahlweise Be- und Entladen der einzelnen Speicherbänder 11, 13, 15 beispielhaft anhand der Fig. 2a bis 2c, die verschiedene Stellungen der Speicherbänder 11, 13, 15 bzw. verschiedene Neigungen der Speicherbänder 11, 13, 15 gegenüber der Horizontalen zeigen, beschrieben.

In Fig. 2a sind die Speicherbänder 11, 13, 15 horizontal orientiert, d.h. sie besitzen eine Neigung von Null gegenüber der Horizontalen 27. Das mittlere Speicherband 13 befindet sich auf gleicher Höhe wie das Einlaufband 23 und das Auslaufband 25, so dass einlaufseitig angelieferte Produkte mittels des mittleren Speicherbands 13 über das Auslaufband 25 direkt an eine nicht dargestellte nachgeschaltete Verarbeitungseinrichtung weitergegeben werden können. Das mittlere Speicherband 13 wird gewissermaßen gleichzeitig be- und entladen.

Fig. 2b zeigt die Speicherbänder 11, 13, 15 in einer gegenüber dem Einlaufband 23 und dem Auslaufband 25 bzw. der Horizontalen 27 um einen ersten Winkel α1 geneigten Stellung. Die einlaufseitigen Enden der Speicherbänder 11, 13, 15 sind gegenüber der in Fig. 2a dargestellten Position unverändert, wohingegen die auslaufseitigen Enden der Speicherbänder 11, 13, 15 in eine tiefer gelegene Position verschoben und somit gegenüber der in Fig. 2a gezeigten Position abgesenkt sind, so dass sich das auslaufseitige Ende des oberen Speicherbands 11 nun auf Höhe des Auslaufbands 25 befindet. In der in Fig. 2b gezeigten Stellung können das mittlere Speicherband 13 mit Produkten beladen und/oder bereits auf dem oberen Speicherband 11 befindliche Produkte über das Auslaufband 25 entladen werden.

In Fig. 2c sind die einlaufseitigen Enden der Speicherbänder 11, 13, 15 gegenüber ihrer Position in Fig. 2b auf eine höher gelegene Position angehoben, so dass sich das einlaufseitige Ende des unteren Speicherbands 15 nun auf Höhe des Einlaufbands 23 befindet. Die auslaufseitigen Enden der Speicherbänder 11, 13, 15 befinden sich in der in Fig. 2b dargestellten Position. Die Speicherbänder 11, 13, 15 sind dabei gegenüber dem Einlaufband 23 und dem Auslaufband 25 bzw. der Horizontalen 27 um einen zweiten Winkel β1 geneigt, der größer ist als der Winkel α1 in Fig. 2b. In der in Fig. 2c gezeigten Stellung der Speicherbänder 11, 13, 15 können das untere, insbesondere bislang nicht beladene Speicherband 15 beladen und/oder das obere Speicherband 11 entladen werden, wie es beispielsweise nötig sein könnte, wenn in der Stellung von Fig. 2b das mittlere Speicherband 13 zwar bereits voll beladen, das obere Speicherband 11 aber noch nicht vollständig entladen ist und weitere Produkte von einer vorgeschalteten Verarbeitungseinrichtung angeliefert werden, die dann mittels des unteren Speicherbands 15 zwischengespeichert werden können.

Neben den in den Fig. 2a bis 2c lediglich beispielhaft dargestellten Stellungen der Speicherbänder 11, 13, 15 bzw. Neigungen der Speicherbänder 11, 13, 15 gegenüber der Horizontalen 27 sind noch weitere Stellungen möglich. So können sich die einlaufseitigen Enden der Speicherbänder 11, 13, 15 in der in Fig. 2c gezeigten Position und zugleich die auslaufseitigen Enden der Speicherbänder 11, 13, 15 in der in Fig. 2a gezeigten Position befinden. Ferner können sich die gegenüberliegenden Enden der Speicherbänder 11, 13, 15 in zu den erläuterten Stellungen umgekehrten Positionen befinden.

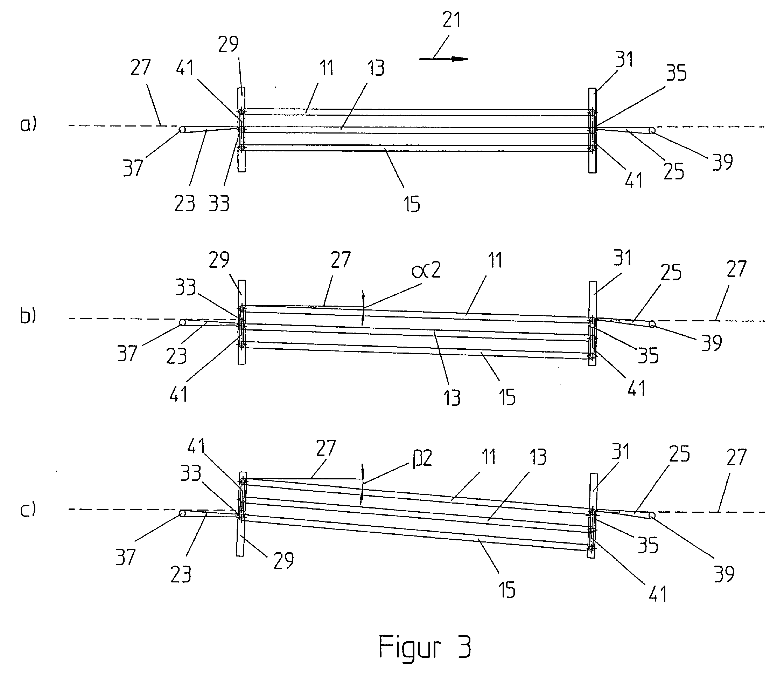

Fig. 3 zeigt eine weitere Ausführungsform der erfindungsgemäßen Vorrichtung, wobei jeweils gleiche oder entsprechende Teile mit denselben Bezugszeichen bezeichnet sind wie in Fig. 2, so dass im Folgenden lediglich die Abweichungen der in Fig. 3 dargestellten Ausführungsform gegenüber der in Fig. 2 dargestellten Ausführungsform erläutert werden.

Die in den Fig. 3a bis 3c dargestellten Stellungen der Speicherbänder 11, 13, 15 entsprechen grundsätzlich den in den Fig. 2a bis 2c dargestellten Stellungen der Speicherbänder 11, 13, 15. Im Gegensatz zu der ersten Ausführungsform gemäß Fig. 2 sind das Einlaufband 23 und das Auslaufband 25 der zweiten Ausführungsform gemäß Fig. 3 jeweils in ihrer Neigung gegenüber der Horizontalen 27 einstellbar. Das Einlaufband 23 und das Auslaufband 25 sind hierfür jeweils um eine Schwenkachse 37, 39 schwenkbar. Darüber hinaus fällt bei geschwenktem Einlaufband 23 und/oder Auslaufband 25 die Schwenkachse 33 und/oder 35 nicht mit dem einlaufseitigen und/oder auslaufseitigen Ende eines Speicherbands 11, 13, 15 zusammen (Fig. 3b und 3c).

Die Neigung des Einlaufbands 23 und die Neigung des Auslaufbands 25 sind dabei jeweils derart einstellbar, dass sie zwischen der Neigung eines nicht dargestellten einlaufseitig an das Einlaufband 23 bzw. auslaufseitig an das Auslaufband 25 anschließenden, jeweils horizontal verlaufenden Förderbands und der Neigung der Speicherbänder 11, 13, 15 liegen. Hierdurch wird erreicht, dass die durch die Neigung der Speicherbänder 11, 13, 15 gegenüber dem Einlaufband 23 bzw. Auslaufband 25 gebildeten Winkel α2 bzw. β2 im Vergleich zu den entsprechenden Winkeln α1 bzw. β1 in Fig. 2 verringert sind. Die Winkel zwischen dem Einlaufband 23 bzw. Auslaufband 25 und der Horizontalen bzw. anschließenden, in Fig. 3 nicht dargestellten Förderbändern können z.B. ebenfalls gleich α2 bzw. β2 sein. Auf jeden Fall sind diese Winkel jedoch kleiner als α1 bzw. β1 gemäß Fig. 2.

Beispielsweise können die in den Fig. 2 und 3 dargestellten Winkel folgende Werte annehmen: α1 = 3°, α2 = 1,5°, β1 = 6° und β2 = 4,5°. Die genannten Werte sind insbesondere kleiner, als dies bei aus dem Stand der Technik bekannten Zwischenspeichern möglich ist.

Die Erfindung wurde unter Bezugnahme auf einen in der Zeichnung dargestellten Zwischenspeicher mit drei übereinander angeordneten Speicherbändern 11, 13, 15 erläutert. Erfindungsgemäß kann jedoch auch eine beliebig andere Anzahl an übereinander angeordneten Speicherbändern vorgesehen sein.

Darüber hinaus kann anstelle des Einlaufbands und/oder des Auslaufbands eine mehrstufige Einlaufeinrichtung und/oder Auslaufeinrichtung vorgesehen sein. So kann beispielsweise bei einem Zwischenspeicher mit vier übereinander angeordneten Speicherbändern ein erstes Einlaufband einer ersten Stufe zwischen einem höher gelegenen zweiten Einlaufband einer zweiten Stufe und einem tiefer gelegenen dritten Einlaufband der zweiten Stufe verstellbar sein, wobei das zweite Einlaufband die beiden oberen Speicherbänder und das dritte Einlaufband die beiden unteren Speicherbänder bedient. Die Auslaufeinrichtung kann entsprechend ausgebildet sein.

### Bezugszeichenliste

- 11, 11': Speicherband
- 13, 13': Speicherband
- 15, 15': Speicherband
- 17': Gehäuse
- 19': Produkt
- 21, 21': Förderrichtung
- 23, 23': Einlaufband
- 25, 25': Auslaufband
- 27: Horizontale
- 29: Führungselement
- 31: Führungselement
- 33: Schwenkachse
- 35: Schwenkachse
- 37, 37': Schwenkachse
- 39, 39': Schwenkachse
- 41: Verbindungselement
- α1, α2: Winkel
- β1, β2: Winkel

## Patentansprüche

1. Vorrichtung zum Zwischenspeichern von mittels einer Fördereinrichtung transportierbaren Produkten, insbesondere Lebensmittelprodukten, mit mehreren übereinander angeordneten Speicherbändern (11, 13, 15), die jeweils zum Transport der Produkte ausgelegt sind,
**dadurch gekennzeichnet,**
**dass** zum wahlweisen Be- und Entladen der einzelnen Speicherbänder (11, 13, 15) Einstellmittel (29, 31, 33, 35) vorgesehen sind, durch die die Neigung der Speicherbänder (11, 13, 15) gegenüber der Horizontalen (27) einstellbar ist.

2. Vorrichtung nach Anspruch 1,
**dadurch gekennzeichnet,**
**dass** die Speicherbänder (11, 13, 15) parallel zueinander orientiert und/oder gemeinsam in ihrer Neigung verstellbar sind.

3. Vorrichtung nach Anspruch 1 oder 2,
**dadurch gekennzeichnet,**
**dass** die Einstellmittel (29, 31, 33, 35) Führungsmittel (29, 31) umfassen, in denen die Speicherbänder (11, 13, 15) höhenverstellbar gelagert sind.

4. Vorrichtung nach Anspruch 3,
**dadurch gekennzeichnet,**
**dass** die höhenverstellbare Lagerung einlaufseitig und/oder auslaufseitig der Speicherbänder (11, 13, 15) ausgebildet ist.

5. Vorrichtung nach Anspruch 4,
**dadurch gekennzeichnet,**
**dass** die beiden Enden der Speicherbänder (11, 13, 15) unabhängig voneinander in ihrer Höhe verstellbar sind.

6. Vorrichtung nach einem der vorhergehenden Ansprüche,
**dadurch gekennzeichnet,**
**dass** zum Ausgleichen einer veränderten Neigung der Speicherbänder (11, 13, 15) die Führungsmittel (29, 31) um eine Schwenkachse (33, 35) schwenkbar sind.

7. Vorrichtung nach einem der vorhergehenden Ansprüche,
**dadurch gekennzeichnet,**
**dass** die Speicherbänder (11, 13, 15) unabhängig voneinander antreibbar sind.

8. Vorrichtung nach einem der vorhergehenden Ansprüche,
**dadurch gekennzeichnet,**
**dass** ein Einlaufband (23) oder eine Einlaufeinrichtung und/oder ein Auslaufband (25) oder eine Auslaufeinrichtung vorgesehen ist, das oder die sich einlaufseitig und/oder auslaufseitig an die Speicherbänder (11, 13, 15) anschließt und dessen oder deren Neigung entweder unveränderlich oder gegenüber der Horizontalen (27) einstellbar ist.

9. Vorrichtung nach Anspruch 8,
**dadurch gekennzeichnet,**
**dass** das Einlaufband (23) oder die Einlaufeinrichtung und/oder das Auslaufband (25) oder die Auslaufeinrichtung eine Neigung aufweist, die zwischen der Neigung eines einlaufseitig an das Einlaufband (23) oder die Einlaufeinrichtung und/oder auslaufseitig an das Auslaufband (25) oder die Auslaufeinrichtung anschließenden Förderbands gegenüber der Horizontalen und der Neigung der Speicherbänder (11, 13, 15) gegenüber der Horizontalen liegt.
